(19) Europäisches Patentamt
European Patent Office
Office européen des brevets

(11) EP 2 397 218 A1

(12) EUROPÄISCHE PATENTANMELDUNG

(43) Veröffentlichungstag:
**21.12.2011 Patentblatt 2011/51**

(21) Anmeldenummer: **10166186.6**

(22) Anmeldetag: **16.06.2010**

(51) Int Cl.:
***B01D 71/44*** *(2006.01)* ***B01D 71/82*** *(2006.01)*
***B01D 53/22*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Helmholtz-Zentrum Geesthacht Zentrum für Material- und Küstenforschung GmbH**
**21502 Geesthacht (DE)**

(72) Erfinder:
- **FRITSCH, Detlev**
  **21465, Reinbek (DE)**
- **MERTEN, Petra**
  **21481, Lauenburg (DE)**

(74) Vertreter: **Grebner, Christian Georg Rudolf**
**Patentanwälte**
**Seemann & Partner**
**Ballindamm 3**
**20095 Hamburg (DE)**

# (54) Kompositmembran, insbesondere zur Gastrennung

(57) Die Erfindung betrifft ein Verfahren zum Herstellen einer Membran, insbesondere Gastrennmembran, wobei die Membran eine selektive Trennschicht aufweist. Das Verfahren zeichnet sich durch die folgenden Verfahrensschritte aus:
a) eine Polymerlösung wird aus wenigstens einem Ammoniumsalz und wenigstens einem mit dem wenigstens einen Ammoniumsalz kompatiblen Polymer hergestellt,
b) die Polymerlösung wird zu einem Film gegossen,
c) aus dem Film wird in einem weiteren Schritt die selektive Trennschicht, vorzugsweise durch Trocknung, hergestellt.

Ferner betrifft die Erfindung eine Membran, insbesondere Gastrennmembran, die eine selektive Trennschicht aufweist.

Außerdem betrifft die Erfindung eine Verwendung von wenigstens einem Ammoniumsalz sowie eine Verwendung einer Membran.

EP 2 397 218 A1

## Beschreibung

Die Erfindung betrifft ein Verfahren zum Herstellen einer Membran, insbesondere Gastrennmembran, wobei die Membran eine selektive Trennschicht aufweist. Ferner betrifft die Erfindung eine Membran, insbesondere Gastrennmembran, die eine selektive Trennschicht aufweist.

Außerdem betrifft die Erfindung eine Verwendung von wenigstens einem Ammoniumsalz sowie eine Verwendung einer Membran.

Technisch eingesetzte Polymermembranen für die Gastrennung bestehen aus einer porösen Unterstruktur und einem porenfreien, dichten Polymerfilm als stoffselektive Trennschicht. In der Regel werden die Membranen bestehend aus einem Material als integral asymmetrische Membranen ausgeführt. Dies ist sinnvoll, wenn das Membranmaterial zu relativ geringem Preis zur Verfügung steht. In jüngster Zeit wurden neue Polymere gefunden, die eine besonders gute Trennleistung erwarten lassen. Da diese Polymere nur zu einem relativ hohen Preis hergestellt werden können, kommt die Ausführung der Trennmembran in integral asymmetrischer Form nicht in Frage. Hierfür wird ein Kompositmaterial verwendet bzw. eine Kompositmembran, bestehend aus einer porösen Trägermembran aus einem Polymer wie Polyacrylnitril und einer dünnen Polymerschicht aus dem Membrantrennmaterial als selektive Trennschicht. Für die technische Verwertbarkeit ist es wichtig, hohe Gasflüsse pro Fläche zu erreichen, um die Membranflächen und die Energiekosten gering zu halten. Die mögliche Selektivität und der Gasfluss sind von den Polymereigenschaften vorgegeben. Proportional zur steigenden Schichtdicke fällt der Fluss und die Selektivität bleibt im Wesentlichen gleich. Es kommt also darauf an, geeignete Materialien zu finden und diese zu möglichst kleinen Schichtdicken zu Komposit- oder integral-asymmetrischen Membranen zu verarbeiten.

Die zur Auswahl stehenden polymeren Materialien können grob in Elastomere und glasartige Polymere unterteilt werden, die sich durch die Lage der Glasübergangstemperatur oberhalb bzw. unterhalb der Raumtemperatur unterscheiden. Beide Polymertypen kommen für die Gastrennung in Frage. Optimierte, technisch eingesetzte Membranen werden in der Regel bei Schichtdicken der trennaktiven Schicht von 0.2 bis 1 $\mu$m eingesetzt.

Glasartige Polymere mit Glasübergangstemperaturen (Tg) > 150°C können in der Gaspermeabilität und Selektivität sehr hohe Werte erreichen. Besonders hohe Gaspermeabilität zeigen glasartige, amorphe Polymere mit großen freien Volumina (free fractional volume (FFV)) von über 20%. Die Basisdaten der Gaspermeation werden mit Filmen von 10 bis 500 $\mu$m Dicke gemessen und in der Literatur in der Regel in Barrer (1 Barrer= $10^{-10}$ $cm^3$(STP) * cm/ ($cm^2$ * s * cmHg) angegeben.

In einer Publikation von Robeson (Robeson, L. M., "The upper bound revisited", Journal of Membrane Science 2008, 320, (1-2), 390-400) wurden alle zugänglichen Gaspermeationsdaten in doppelt logarithmischen Graphen mit Permeabilität gegen Selektivität für verschiedene Gaspaare aufgetragen und je eine "upper bound" gefunden. Polymere an oder oberhalb dieser Grenzlinie sind per se die theoretisch besten Materialien für das zu trennende Gaspaar. Generell sinkt mit zunehmender Permeabilität die Selektivität, wobei jedoch bei gegebener Permeabilität sich die Selektivitäten stark unterscheiden können.

Für technische Anwendungen muss ein Kompromiss zwischen Permeabiltität bzw. Permeanz der Membran und Selektivität gefunden werden. Innerhalb der dem Fachmann bekannten Grenzen ändert sich der Gasfluss durch einen Polymerfilm linear mit der Dicke. Da die Permeabilität auf die Dicke normiert ist, kann aus diesen Daten in erster Näherung der zu erhaltende Fluss bei einer bestimmten Dicke errechnet werden.

In der Regel bleibt die Selektivität des Polymers dabei erhalten und die Daten können für die Auslegung technischer Gastrennanlagen verwendet werden. Die Dicke der aktiven Trennschicht liegt bei technischen Membranen im Bereich von wenigen $\mu$m bis hinunter zu einigen 100 nm.

Es zeigt sich jedoch, dass der glasartige, eingefrorene Zustand der Polymerketten für Polymere mit extrem großem freien Volumen sich auch über kürzere Zeiträume verändert, die Packungsdichte sich erhöht und damit einhergehend die Gaspermeabilität sinkt und die Gasselektivität steigt.

Generell wird bei allen glasartigen Polymeren eine mehr oder weniger stark ausgeprägte Veränderung der Permeationseigenschaften über die Zeit gefunden. Die Polymere altern, wobei sehr dünne Polymerfilme sehr viel stärker altern als dickere Filme. Dies äußert sich für die Gastrennung in einer starken Abnahme des Gasflusses durch die Membran.

Eine Ausnahme von dieser Regel stellen allerdings Tefloncopolymere dar. Reines Teflon® (Poly(tetrafluorethylene)) bildet sehr dichte Filme mit äußerst geringer Permeabilität. Durch den Einbau von räumlich sperrigen Comonomeren bestehend aus 1,3-Dioxolen wird eine dichte Packung wie bei reinem Teflon verhindert und ein großes freies Volumen von über 20% erreicht. Im Handel sind solche Polymere unter der Bezeichnung Teflon®AF oder Hyflon®AD erhältlich. Diese Filme verlieren sehr wenig an Permeanz über die Zeit, sie zeigen allerdings auch nur eine sehr geringe Selektivität in der Gastrennung.

In US 2009/0277837 A1 werden Kompositmembranen aus diesen Polymeren beschrieben, die eine Permeanz von 0.44 $m^3/m^2$hbar für $CO_2$ bei einer Selektivität von $\alpha(CO_2/ CH_4)$ = 12.9 erreichen.

Eine andere Möglichkeit den Rückgang der Permeanz bzw. Permeabilität über die Zeit zu verringern, besteht

in einer Vernetzung der Polymerketten. Durch die Ausbildung eines Netzwerkes wird die Kettenpackung stabilisiert und die Alterung durch Kompaktierung der Ketten unter Verringerung des freien Volumens kann nur noch sehr eingeschränkt stattfinden.

So werden gemäß Shao et al. (Shao, L., et al., "Crosslinking and stabilization of high fractional free volume polymers for gas Separation", International Journal of Greenhouse Gas Control 2008, 2, (4), 492-501) bifunktionelle, aromatische Azide verwendet, die unter UV-Licht mit den Polymerketten von Poly(4-methyl-2-pentyne) reagieren und diese dabei vernetzen. Dadurch verringert sich zwar die Permeabilität auf etwa ein Drittel von 950 auf 300 bis 350 Barrer $N_2$. Allerdings nimmt die Permeabilität der gemessenen dicken Filme im Verlauf von 150 Tagen nur noch um 10-15% ab, wohingegen ein unvernetzter Film im gleichen Zeitraum mit weiterhin fallender Tendenz um mehr als 50% an Permeabilität verliert. Diese Methode ist aber schwierig in eine technische Anwendung zu übertragen und nicht generell auf andere Polymere zu übertragen.

Allerdings lassen sich z.B. Polymere mit intrinsischer Mikroporosität (PIM), wie in WO 2005/012397 A2 beschrieben, die eine sehr große Gaspermeabilität bei sehr guter Gasselektivität besitzen, mit dieser Methode nicht vernetzen.

Gemäß US 2009/0031897 A1 wird Polyimid (BP-55 polyimide) verwendet, das sich mit UV-Licht vernetzen lässt. Es werden auch verschiedene, permeable, nanoskalige Füllstoffe zugesetzt, um die Selektivität und die Permeabilität zu verbessern. Allerdings werden nur die Daten von dicken Filmen offenbart, die so technisch nicht eingesetzt werden können. Diese Methode in technisch anwendbare, extrem dünne Filme von 100 bis 1000 nm fehlstellenfrei umzusetzen, ist nur mit großem Aufwand möglich.

Ferner ist in US 7658784 B2 offenbart, dass der Einbau von porösen Nanoteilchen in sehr dünne Filme eine Oberflächenbehandlung erfordert, um Teilchen und Polymer miteinander verträglich zu machen.

Neben reaktiven Verbindungen, wie in US 7658784 B2 beschrieben, können auch nicht-reaktive Phasenvermittler, wie in US7344585 B1 beschrieben, eingesetzt werden.

In den oben genannten Beispielen gemäß dem Stand der Technik führt nur bzw. ausschließlich die chemische Vernetzung zu einem deutlich langsameren Flussabfall der Membranfilme. In den anderen Beispielen werden Daten nur für die Anfangseigenschaften der hergestellten Membranen oder Polymerfilmen gegeben. Die Membraneigenschaften werden nicht über einen längeren Zeitraum berichtet.

Es ist Aufgabe der Erfindung, eine Membran bzw. eine Polymermembran, insbesondere eine Kompositmembran zur Gastrennung, sowie ein Verfahren zur Herstellung derselben anzugeben, mittels der eine hohe Permeabilität und Selektivität insbesondere auch nach einem längeren Einsatz ermöglicht wird.

Die Aufgabe wird gelöst durch ein Verfahren zum Herstellen einer Membran, insbesondere Gastrennmembran, wobei die Membran eine selektive Trennschicht aufweist, mit den folgenden Schritten:

a) eine Polymerlösung wird aus wenigstens einem Ammoniumsalz und wenigstens einem mit dem wenigstens einen Ammoniumsalz kompatiblen Polymer hergestellt,

b) die Polymerlösung wird zu einem Film gegossen,

c) aus dem Film wird in einem weiteren Schritt die selektive Trennschicht, vorzugsweise durch Trocknung, hergestellt.

Durch den Zusatz von Ammoniumsalzen zu einer Beschichtungslösung bzw. Polymerlösung und die Verwendung eines mit dem Ammoniumsalz kompatiblen Polymer wird eine Membran bzw. Kompositmembran mit einer selektiven Trennschicht für Gase bereitgestellt, die eine deutlich höhere Gasselektivität aufweist. Die hohe Gasselektivität bleibt auch für längere Zeit hoch bzw. stabil. Beispielsweise hat sich in Langzeitversuchen gezeigt, dass auch nach einer Alterung von mehreren Wochen die flussstabile Membran sehr hohe Selektivität aufweist.

Da die erfindungsgemäßen Membranen neben einem hohen Fluss auch eine hohe Selektivität nach einer langen Gebrauchszeit erreichen und damit gegenüber bisher bekannten Gastrennmembranen langzeitstabil sind, können die Membranmodule mit weniger Energieaufwand betrieben werden. Außerdem erreichen die Membranen eine bessere Leistung gegenüber bislang bekannten Membranen. Zudem können die Membranmodule dadurch kleiner gebaut werden, da weniger Membranfläche erforderlich ist.

Das für die Polymerlösung bzw. Beschichtungslösung verwendete Ammoniumsalz wird dabei in dem gleichen Lösemittel oder Lösemittelgemisch gelöst wie das die trennaktive Schicht ausbildende Polymer. Diese Lösung ist dabei homogen, sehr einfach herzustellen und langzeitstabil. Alle für die Herstellung von technischen Membranen verwendeten Verfahren, wie z.B. Tauch- oder Walzverfahren, sind für die erfindungsgemäße Membranherstellung anwendbar. Dadurch wird die trennaktive Schicht auf eine z.B. mikroporöse Trägermembran, z.B. PAN (Polyacrylnitril) Träger, aufgetragen und eine Kompositmembran hergestellt.

In einem weiteren Verfahrensschritt wird vorteilhafterweise als Polymer für die Polymerlösung, das ein mit dem Ammoniumsalz kompatibles Polymer ist, ein Polymer mit einem großen freien Volumen, insbesondere mit einem Anteil

an freiem Volumen (fractional free volume (FFV)) von mindestens 15% und mehr, und/oder ein glasartiges, vorzugsweise amorphes, Polymer verwendet.

Das freie Volumen eines Polymers beschreibt oder kennzeichnet den Raum, der von Polymersegmenten eines Polymers nicht besetzt ist. Der Anteil an freiem Volumen beeinflußt dabei die Diffusionsgeschwindigkeit kleiner Moleküle durch eine Membran bzw. Polymermembran. Bei glasartigen Polymeren wird das freie Volumen oberhalb der Glasübergangstemperatur (Tg) des jeweiligen Polymers stetig größer, während unterhalb der Glasübergangstemperatur ($T_g$) der Anteil an freiem Volumen wesentlich langsamer mit der Temperatur fällt, somit ein Teil des freien Volumens eingefroren bleibt.

Insbesondere wird als Polymer für die Polymerlösung ein Polymer mit intrinsischer Mikroporosität, insbesondere PIM-1 oder PIM-1 CO1-50, oder Poly(1-Trimethylsilyl-1-Propyne) (PTMS) verwendet.

Als Polymer mit einem großen freien Volumen mit einem fractional free volume (FFV) von über 20% ist ein Polymer mit intrinsischer Mikroporosität unter der Bezeichnung PIM-1 bekannt, das die folgende Struktur hat:

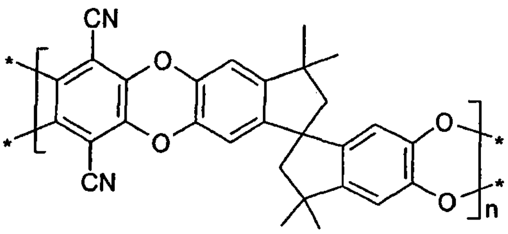

.

PIM-1 CO50 als weiteres Beispiel für ein Polymer mit einem großen freien Volumen hat ferner die Struktur:

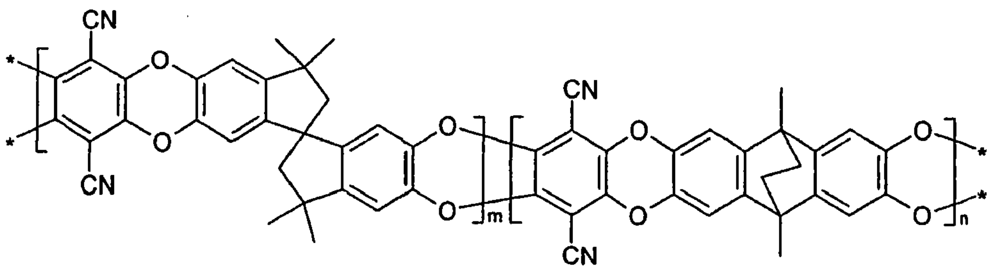

,

wobei m + n = 1 gilt und n von 0 bis 0.5 variert bzw. variieren kann.

Vorzugweise wird die Herstellung der Polymerlösung in einem, vorzugsweise organischen, polaren Lösungsmittel ausgeführt.

Dazu ist weiter in einer Ausgestaltung vorgesehen, dass die Herstellung der Polymerlösung in einem halogenierten Lösungsmittel, vorzugsweise Chloroform ($CHCl_3$), oder Dichlormethan oder Tetrahydrofuran (THF) oder eines dieser Lösemittel mit Zusätzen von 1,4-Dioxan, oder Alkohol(en) oder Keton(en), insbesondere Aceton oder Methylethylketon ausgeführt wird.

Bevorzugterweise wird die Polymerlösung bzw. Beschichtungslösung bei einer Temperatur zwischen 20° Celsius bis 90° Celsius hergestellt.

Um eine langzeitstabile selektive Trennschicht auszubilden, wird überdies vorgeschlagen, dass als Ammoniumsalz ein, vorzugsweise quartäres, Ammoniumsalz gemäß der allgemeinen Formel

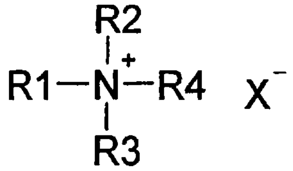

,

verwendet wird, wobei insbesondere R1, R2, R3 und R4 jeweils organische Reste sind und $X^-$ein Anion ist.

Das einfachste, quartäre Ammoniumsalz (Tetramethylammoniumsalz) mit R1 bis R4 = $CH_3$ ist nur in polaren Lösemitteln löslich ist, weshalb es schwierig ist, dieses in ein unpolares Polymer mit extrem großem freien Volumen einzubauen.

Die Löslichkeit des Ammoniumsalzes ist auch vom Anion abhängig. Werden alle oder auch nur einer der Reste R1 - R4 verlängert, so verbessert sich die Löslichkeit in organischen Lösemitteln und sie werden außer in Wasser und Alkoholen auch in halogenierten Lösemitteln wie Chloroform, Dichlormethan, etc.; Ketonen wie Aceton, Methylethylketon, etc. und cyclischen Ethern wie Tetrahydrofuran löslich. Damit sind diese Ammoniumsalze auch in denselben Lösemitteln wie die Polymere löslich und können in homogener Lösung angewendet werden.

Eine Vielzahl von Ammoniumsalzen der obigen allgemeinen Formel ist kommerziell erhältlich, wobei sie z.B. unter dem Handelsnamen Aliquat® als Phasentransferkatalysator verwendet werden.

Ferner können polymere Amine zu quartären Ammoniumsalzen permethyliert werden, so dass diese polymeren Ammoniumsalze beim Einsatz von längeren Kohlenwasserstoffresten auch in weniger polaren organischen Lösemitteln löslich werden bzw. sind.

Um die Löslichkeit in weniger polaren Lösemitteln zu erreichen, werden vorzugsweise die Polyamine nicht vollständig permethyliert. Ein Beispiel ist in der nachfolgenden Formel gegeben:

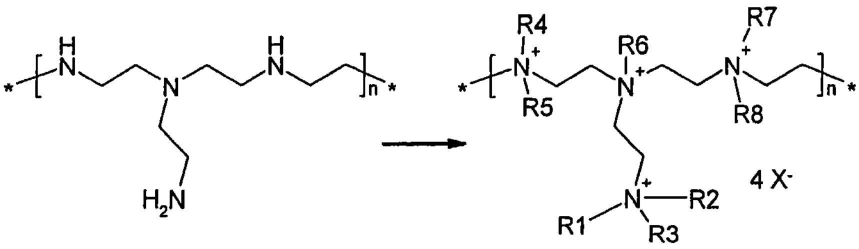

R1-R8=C4-C16

,

wobei die Reste R1 bis R8 vorzugsweise aus linearen oder verzweigten Alkanen mit 4 bis 16 C-Atomen bestehen.

Das Anion X- entsteht mit der Wahl des Alkylierungsmittels. In der Regel bestehen die Anionen z.B. als Chlorid, Bromid, Jodid, Methosulfat. Die Anionen können dabei sehr einfach nach bekannten Methoden über eine Anionenaustauschersäule ausgetauscht werden.

Die Anionen beeinflussen sowohl die Löslichkeit der Ammoniumsalze als auch deren Sorptionsfähigkeit von $CO_2$**.** Da auch die Größe der Anionen unterschiedlich ist, sind bei einem Einbau der Ammoniumsalze in die Membran auch unterschiedlich große Plätze belegt. Das freie Volumen des polymeren Blends bzw. der Polymerlösung wird verändert und damit auch die Membraneigenschaften in Bezug auf Permeabilität und Selektivität.

Vorzugweise wird in einer Ausgestaltung des Verfahrens als Ammoniumsalz n-Hexyltrimethylammoniumbromid (n-C6-TMABr) oder n-Tetradecyltrimethylammoniumbromid (n-C14-TMABr) oder Tetramethylammoniumfluorid (TMAF) oder ein polymeres Ammonimsalz verwendet.

Vorteilhafterweise wird eine langzeitstabile Membran mit einer hohen Permeabilität und Selektivität, insbesondere für Gase, ausgebildet, wenn als Polymerlösung bzw. Beschichtungslösung für die selektive Trennschicht eine Mischung von Ammoniumsalz und Polymer im Mischungsverhältnis zwischen (5% Ammoniumsalz und 95% Polymer) und (40% Ammoniumsalz und 60% Polymer) bereitgestellt wird.

Insbesondere wird in einem weiteren Verfahrensschritt der Film oder die selektive Trennschicht auf einen, vorzugsweise porösen, Träger, insbesondere PAN-Träger, aufgebracht. Die als Gastrennmembran ausgebildete Kompositmembran ist aus einer per se bekannten porösen Trägermembran oder einem Membranträger aufgebaut, auf die bzw. auf den eine selektive Trennschicht aufgebracht ist.

Die zum Einsatz gebrachten porösen Trägermembranen besitzen vorzugsweise eine enge Porenradienverteilung und einen solchen mittleren Porenradius, dass die Moleküle der Beschichtungslösung nicht in die Poren der porösen Trägermembran eindringen können.

Ferner wird die Aufgabe gelöst durch eine Membran, insbesondere Gastrennmembran oder Kompositmembran, die eine selektive Trennschicht aufweist, vorzugsweise erhältlich oder hergestellt durch Ausführung der Verfahrensschritte gemäß dem voranstehend beschrieben Verfahren, wobei die selektive Trennschicht aus wenigstens einem Ammoniumsalz und einem mit dem wenigstens einen Ammoniumsalz kompatiblen Polymer besteht oder hergestellt ist oder wird. Zur Vermeidung von Wiederholungen wird auf die obigen Ausführungen ausdrücklich verwiesen.

Die Membran zeichnet sich ferner dadurch aus, dass die selektive Trennschicht eine Mischung zwischen (5% Ammoniumsalz und 95% Polymer) und (40% Ammoniumsalz und 60% Polymer) aufweist.

Um eine Kompositmembran für die Trennung von Gasen bereitzustellen, ist außerdem bei der Membran vorgesehen, dass die selektive Trennschicht auf einem, vorzugsweise porösen, Träger, vorzugsweise PAN-Träger, angeordnet ist oder wird.

Weiterhin wird die Aufgabe gelöst durch eine Verwendung von wenigstens einem Ammoniumsalz und einem mit dem Ammoniumsalz kompatiblen Polymer zur Herstellung einer Membran, insbesondere Gastrennmembran, wobei die Membran bzw. Kompositmembran eine selektive Trennschicht aufweist, die erfindungsgemäß hergestellt wird. Dazu wird auf die voranstehende Beschreibung ausdrücklich verwiesen.

Zweckmäßigerweise wird zur Lösung der Aufgabe eine Verwendung einer Membran oder einer Kompositmembran zur Trennung von Gasen aus einem Gasgemisch vorgeschlagen. Hierbei wird die Membran beispielsweise bei der selektiven Abtrennung von Gasen aus Gasströmen oder aus Gasmischungen eingesetzt.

Außerdem ist ein Gastrennmodul mit einer erfindungsgemäßen Membran, insbesondere einer Gastrennmembran, vorgesehen sowie ein Verfahren zum Betrieb eines Gastrennmoduls mit einer entsprechenden erfindungsgemäßen Membran, wobei zwischen einer ersten Seite und einer zweiten Seite der Membran eine Gasdruckdifferenz eingestellt wird.

Die Erfindung wird nachstehend ohne Beschränkung des allgemeinen Erfindungsgedankens anhand von Ausführungsbeispielen beschrieben, wobei bezüglich aller im Text nicht näher erläuterten erfindungsgemäßen Einzelheiten ausdrücklich auf die Beispiele verwiesen wird.

Um die Gaspermeationseigenschaften von Polymeren oder polymeren Blends zu messen, wurden Filme von ca. 100 μm Dicke hergestellt. Diese Filme mit bekannter Dicke wurden in einer Druckanstiegsanlage mit verschiedenen Reingasen gemessen.

Die Druckanstiegsanlage ist in der Literatur beschrieben (Al-Masri, M., et al., "New polyimides for gas Separation. 1. Polyimides derived from substituted terphenylenes and 4,4'-(hexafluoroiso-propylidene)diphthalic anhydride", Macromolecules 1999, 32, 7853-, 7858).

Zur Messung werden die vollkommen entgasten, evakuierten Filme mit einem Druck von 500 bis 1000 mbar beaufschlagt und der Druckanstieg (Y) über die Zeit (X) gemessen. Nach einer gewissen Zeit durchdringen die Gase den Film bis ein linearer Druckanstieg (steady state) erreicht ist. Aus der Steigung des linearen Bereiches wird mit bekannter Fläche und Dicke (l) der Membran die Permeabilität (P) errechnet. Diese wird in Barrer angegeben (Barrer = $cm^3(STP)*cm/(cm^2*s*cmHg) * 10^{-10}$ ; STP=Standard Temperatur und Druck).

Der Schnittpunkt des linearen Bereiches mit der X-Achse (Zeit) beschreibt den Zeitabstand bis zum Durchdringen des Gases und wird als Time-lag (Θ) bezeichnet. Daraus ergibt sich gemäß der nachfolgenden Formel der Diffusionskoeffizient *($D_a$)* mit den Einheiten cm/s.

$$\Theta = l^2 / (6 * D_a)$$

Aus der Beziehung P = D * S kann anschließend mit den bekannten Werten für P, D die Löslichkeit S errechnet werden.

Als Polymere für die Beschichtungslösung wurden die folgenden Polymere mit einem großen freien Volumen verwendet:

| | |
|---|---|
| PIM-1 | hergestellt wie in Kricheldorf beschrieben (Kricheldorf, H. R., et al., "Cyclic and telechelic ladder polymers derived from tetrahydroxytetramethylspirobisindane and 1,4-dicyanotetrafluorobenzene", J. Polym. Sci. Part A: Polym. Chem. 44 (2006), 5344 - 5352) mit einer intrinsischen Viskosität in Chloroform von 30-40 $cm^3$/g. |
| PIM1 CO1-50 | Copolymer mit 50% Anteil von 9,10-Dimethyl-9,10-ethano-9,10-dihydro-2,3,6,7-tetrahydroxy-anthracen (CO1). Das Polymer wurde nach gleicher Methode wie PIM-1 hergestellt und hat eine intrinsische Viskosität in Chloroform von 38 $cm^3$/g. |
| PTMSP | [Poly(1-trimethylsilyl-1 -propyne. ABCR #AB109219]. |

Als Zusätze oder Zusatzstoffe wurden den Polymeren mit großem freien Volumen die folgenden Substanzen zugemischt:

| | |
|---|---|
| PEG 600 | [Polyethylenglycol, Mw~600 g/mol, Merck # 807486] |
| PPG | [Poly(propylene glycol)-block-poly(ethylene glycol)-block-poly(propylene glycol), $M_n$ ~8400 g/mol, Aldrich #412325]. |
| PEI | [verzweigtes Polyethylenimin, $M_n$ ca. 10000 g/mol, Aldrich #408727] |
| n-C6-TMABr | n-Hexyltrimethylammoniumbromid |
| n-C14-TMABr | n-Tetradecyltrimethylammoniumbromid |
| TMAF | Tetramethylammoniumfluorid, wasserfrei |
| NMM-6 | mesoporöses, nanoskaliges Silica, Nanoscape AG, München |
| LTL_fd | nanoskaliger Zeolith, Nanoscape AG, München |

Beispiel 1 Herstellung von Filmen aus Polymeren mit oder ohne Zusatzstoffe

Ein Polymer (0,35 bis 0,5g) wird mit Chloroform zu einer Lösung von 2-10% angesetzt. Es werden zu verschiedenen Lösungen je 10% der Ammoniumsalze zugegeben, bezogen auf die Masse der jeweiligen Polymere. Die Lösungen werden in eine Teflonmulde gegeben und unter Spülung mit trockenem Stickstoff oder Argon bei Raumtemperatur abgedampft. Die Blendmembranen bestehen nach dem Abdampfen des Lösemittels aus Polymer (90%) und Ammoniumsalz (10%). Zum Vergleich werden Membranen ohne Zusatzstoffe nach dem gleichen Verfahren hergestellt.

Die unter Schutzgas in trockener Atmosphäre abgedampften Membranfilme werden für 16h bei 120°C im Hochvakuum einer ölfreien Turbomolekularpumpe getrocknet.

Als Ammoniumsalze werden n-Hexyltrimethylammoniumbromid (n-C6-TMABr) und n-Tetradecyltrimethylammoniumbromid (n-C14-TMABr) verwendet.

Die thermografimetrische Analyse (TGA) der Filme zeigt für die reinen Polymere ohne Salzzusatz bis 350°C nur einen thermischen Abbau von kleiner 5%. Durch Zusatz von 10% n-C6-TMABr oder n-C14-TMABr zeigt sich gemäß der TGA bis 350°C ein Masseverlust von 8-10% (n-C14-TMABr) oder 12% (n-C6-TMABr).

Durch TGA Kopplung mit einem FT-IR Gerät konnte der Massenverlust von ca. 2% bis zu 200°C hauptsächlich noch gebundenem Chloroform zugeordnet werden neben auftretenden Signalen, mit CH-Schwingungen bei 2970 $cm^{-1}$, die der Zersetzung des Ammoniumsalzes unter Abspaltung von $CH_3Br$ zugeordnet werden können. Bei höheren Temperaturen werden die CH-Schwingungen im Bereich 2931 $cm^{-1}$ und 2864 $cm^{-1}$ gefunden, die auf weitere Spaltprodukte der Ammoniumsalze hindeuten. Wasser sollte in der Gasphase bei 1500, 1700 und 3800 $cm^{-1}$ Signale geben, wird aber nicht gefunden.

Die Gaspermeationsdaten der Blendmembranen wurden mit der oben beschriebenene Druckanstiegsanlage gemessen und sind in Tabelle 1 (Permeabilität) und 2 (Selektivität) zusammengefasst.

Aus den Tabellen 1 und 2 ergibt sich, dass PIM-1 und PIM1 CO1-50 sehr ähnliche Eigenschaften besitzt. Bei gealterten Membranen verringert sich die Gaspermeabilität für PIMs um den Faktor 4 bis 5 bei gleichzeitig fast einer Verdopplung der Gasselektivität für z.B. $O_2/N_2$. Durch den Zusatz des Ammoniumsalzes verringert sich in den dicken Membranfilmen die Permeabilität weiter bei in etwa der Selektivität der gealterten Membran.

Bei PTMSP tritt das gleiche Verhalten auf, allerdings verbessert sich die $CO_2/N_2$-Selektivität von 4.1 auf 7.4. Für den Diffusionskoeffizienten gilt das Gleiche wie aus den Tabellen 3 und 4 ersichtlich.

Tabelle 1 Permeabilität (P) verschiedener Membranfilme in Barrer bei 30°C.

| Polymer | Zusatz | P $O_2$ | P He | P $H_2$ | P $CO_2$ | P $CH_4$ | Literaturangabe |
|---|---|---|---|---|---|---|---|
| PIM1 CO1-50 (1) | | 1900 | 1500 | 3900 | 13800 | 1500 | |
| PIM-$_1$ (1) | | 1530 | 1320 | 3300 | 11200 | 1160 | JMS 2008 |
| PIM-1 (2) | | 370 | 660 | 1300 | 2300 | 125 | JMS 2005 |
| PIM-1 | 10% n-C6-TMABr | 117 | 230 | 420 | 860 | 54 | |
| PIM-1 | 10% n-C14-TMABr | 78 | 160 | 280 | 570 | 36 | |

(fortgesetzt)

| Polymer | Zusatz | P $O_2$ | P He | P $H_2$ | P $CO_2$ | P $CH_4$ | Literaturangabe |
|---|---|---|---|---|---|---|---|
| PTMSP | | 9000 | - | 15000 | 27000 | 15000 | Merkel 2000 |
| PTMSP | 10% n-C14-TMABr | 2620 | 2170 | 5110 | 11100 | 3840 | |

(1) Film in Methanol gequollen, 16h in ölfreiem Hochvakuum bei 120 °C getrocknet/gealtert
(2) mehrere Wochen gealterter Film

Tabelle 2 Gasselektivität verschiedener Membranfilme zu Stickstoff bei 30°C.

| Polymer | Zusatz | α ($O_2/N_2$) | α ($He/N_2$) | α ($H_2/N_2$) | α ($CO_2/N_2$) | α ($CH_4/N_2$) | Literaturangabe |
|---|---|---|---|---|---|---|---|
| PIM1 CO1-50 (1) | | 2.4 | 1.9 | 4.9 | 17.5 | 1.9 | |
| PIM-1 (1) | | 2.5 | 2.2 | 5.4 | 18.4 | 1.9 | JMS 2008 |
| PIM-1 (2) | | 4.0 | 7.2 | 14.1 | 25.0 | 1.4 | JMS 2005 |
| PIM-1 | 10% n-C6-TMABr | 3.6 | 7.0 | 12.8 | 26.2 | 1.6 | |
| PIM-1 | 10% n-C14-TMABr | 3.6 | 7.6 | 13.0 | 26.3 | 1.7 | |
| PTMSP | | 1.4 | | 2.3 | 4.1 | 2.3 | Merkel 2000 |
| PTMSP | 10% n-C14-TMABr | 1.7 | 1.4 | 3.4 | 7.4 | 2.6 | |

(1) Film Methanol gequollen, 16h in ölfreiem Hochvakuum bei 120 °C getrocknet/gealtert
(2) mehrere Wochen gealterter Film

Tabelle 3 Diffusionskoeffizient (D) verschiedener Membranfilme in $cm^2/s$ $*10^8$ bei 30°C.

| Polymer | Zusatz | D $O_2$ | D He | D $H_2$ | D $CO_2$ | D $CH_4$ | Literaturangabe |
|---|---|---|---|---|---|---|---|
| PIM1 CO1-50 (1) | | 430 | 7700 | 5600 | 180 | 84 | |
| PIM-1 (1) | | 390 | 6800 | 5000 | 160 | 71 | JMS 2008 |
| PIM-1 (2) | | 81 | 2700 | 1700 | 26 | 6.8 | JMS 2005 |
| PIM-1 | 10% n-C6-TMABr | 64 | 2400 | 1300 | 24 | 8.2 | |
| PIM-1 | 10% n-C14-TMABr | 46 | 2000 | 970 | 17 | 5.9 | |
| PTMSP | | 5200 | - | 26000 | 3300 | 3600 | Merkel 2000 |
| PTMSP | 10% n-C14-TMABr | 1600 | 9100 | 8800 | 1100 | 850 | |

(1) Film Methanol gequollen, 16h in ölfreiem Hochvakuum bei 120 °C getrocknet/gealtert
(2) mehrere Wochen gealterter Film

Tabelle 4 Diffusionsselektivität verschiedener Membranfilme zu Stickstoff bei 30°C.

| Polymer | Zusatz | D ($O_2/N_2$) | D ($He/N_2$) | D ($H_2/N_2$) | D ($CO_2/N_2$) | D ($CH_4/N_2$) | Literaturangabe |
|---|---|---|---|---|---|---|---|
| PIM1 CO1-50 (1) | | 2.3 | 41.3 | 30.3 | 1.0 | 0.5 | |
| PIM-1 (1) | | 2.4 | 42.5 | 31.3 | 1.0 | 0.4 | JMS 2008 |
| PIM-1 (2) | | 3.7 | 122.7 | 77.3 | 1.2 | 0.3 | JMS 2005 |

(fortgesetzt)

| Polymer | Zusatz | D ($O_2/N_2$) | D ($He/N_2$) | D ($H_2/N_2$) | D ($CO_2/N_2$) | D ($CH_4/N_2$) | Literaturangabe |
|---|---|---|---|---|---|---|---|
| PIM-1 | 10% n-C6-TMABr | 2.8 | 106.3 | 58.9 | 1.1 | 0.4 | |
| PIM-1 | 10% n-C14-TMABr | 2.8 | 124.3 | 60.0 | 1.0 | 0.4 | |
| PTMSP | | 1.2 | - | 5.9 | 0.8 | 0.8 | Merkel 2000 |
| PTMSP | 10% n-C14-TMABr | 1.4 | 8.3 | 8.1 | 1.0 | 0.8 | |
| (1) Film Methanol gequollen, 16h in ölfreiem Hochvakuum bei 120 °C getrocknet/gealtert<br>(2) mehrere Wochen gealterter Film | | | | | | | |

Beispiel 2 Herstellung von dünnen Kompositmembranen

Die bezeichneten Polymere werden in einem Lösemittel vollständig gelöst und in einigen Fällen mit Zusatzstoffen versehen. Feste Zusatzstoffe werden durch Ultraschall dispergiert, um eine homogene Beschichtungslösung zu erhalten. Es wird mit einer Maschine im Tauchverfahren beschichtet. Als Trägermembran wird eine poröse Polyacrylnitril (PAN)-Membran verwendet mit einem $N_2$-Fluss von 80 bis 100 $m^3$ / $m^2$hbar.

In einer Dauermessapparatur wird mit trockener Druckluft der Gasfluss und mit einem angeschlossenen $O_2$-Sensor der Sauerstoffgehalt des Permeates gemessen. Es wird bei einem Stufenschnitt von kleiner 1 % gearbeitet. Die Daten werden über ein Computerprogramm bei Messung bearbeitet und die Selektivität, $N_2$ und $O_2$-Fluss berechnet. Feeddruck, Permeatdruck, Überströmung der Membran und Permeatfluss werden gemessen und registriert.

Tabelle 5 zeigt die Ergebnisse verschiedener PIM-1 Kompositmembranen. Es wird eine durchschnittliche $O_2/N_2$-Seiektivität von 3 bis 4 erreicht, die aber bis zu 5.4 steigen können. Bei langen Messzeiten liegt der Fluss (J) um oder unter 0.1 $m^3$ / $m^2$hbar bei einer Selektivität von 3 bis 3.3.

Aus Tabelle 6 ergibt sich, dass die polymere Zusatzstoffe PPG und PEG bei Betriebszeiten von bis zu 1000h im Dauerbetrieb $O_2$-Flüsse von ca. 0.1 $m^3/m^2$hbar bei Selektivitäten von 4 bis 6 ergeben. Die Zugabe von mesoporösem Silica (NMM-6) oder Zeolith (LTL_fd) führt zu höheren Flüssen aber nur zu Selektivitäten zwischen 3 und 4 für $O_2/N_2$.

Tabelle 5 Kompositmembranen aus PIM-1 im Dauertest bei Raumtemperator (RT).

| No. | Polymer | Träger | Lösemittel | Konzentration /% | Messdauer /h | J $O_2$ / ($m^3$/ $m^2$hbar) | α ($O_2/N_2$) |
|---|---|---|---|---|---|---|---|
| 5-1 | PIM-1 | PAN | THF | 0.6 | 3000 | 0.14 | 3.0 |
| 5-2 | PIM-1 | PAN | THF/Dioxan | 1.0 | 2990 | 0.06 | 3.3 |
| 5-3 | PIM-1 | PAN | $CHCl_3$/THF | 1.0 | 145 | 0.30 | 5.4 |
| 5-4 | PIM-1 | PAN | $CHCl_3$/THF | 0.5 | 145 | 0.20 | 4.4 |
| 5-5 | PIM-1 | PAN | THF/$CHCl_3$ | 1.0 | 113 | 0.20 | 3.8 |
| 5-6 | PIM-1 | PAN | $CHCl_3$/THF | 1.0 | 90 | 0.46 | 5.3 |
| 5-7 | PIM-1 | PAN | $CHCl_3$/THF | 0.5 | 90 | 0.31 | 4.5 |

Bei zwei genannten Lösemitteln wird das erstgenannte Lösemittel vorgelegt und mit dem zweiten bis zur beginnenden Trübung titriert.

Tabelle 6 Kompositmembranen aus PIM-1 mit Zusatzstoffen bei RT (Raumtemperatur).

| No. | Polymer | Zusatzstoff | Lösemittel | Konzentration /% | Messdauer /h | J $O_2$ /($m^3$/ $m^2$hbar) | α ($O_2/N_2$) |
|---|---|---|---|---|---|---|---|
| 6-1 | PIM-1 | 15% PPG | THF | 1.0 | 1650 | 0.04 | 5.0 |
| 6-2 | PIM-1 | 15% PPG | THF | 1.0 | 1000 | 0.10 | 6.1 |

(fortgesetzt)

| No. | Polymer | Zusatzstoff | Lösemittel | Konzentration /% | Messdauer /h | J $O_2$ /($m^3$/ $m^2$hbar) | α ($O_2/N_2$) |
|---|---|---|---|---|---|---|---|
| 6-3 | PIM-1 | 20% PEG | THF | 0.8 | 800 | 0.12 | 4.0 |
| 6-4 | PIM-1 | 20% PEI | THF/Dioxan 31 % | 1.0 | 240 | 0.07 | 3.6 |
| 6-5 | PIM-1 | 10% NMM-6 | THF | 1.6 | 528 | 0.45 | 3.8 |
| 6-6 | PIM-1 | 22% NMM-6 | THF | 1.6 | 810 | 0.65 | 2.3 |
| 6-7 | PIM-1 | 22% NMM-6 | $CHCl_3$ | 1.0 | 624 | 0.74 | 3.6 |
| 6-8 | PIM-1 | 30% NMM-6 | $CHCl_3$ | 1.0 | 312 | 1.40 | 3.1 |
| 6-9 | PIM-1 | 30% NMM-6/PEI (2/1) | $CHCl_3$ | 1.0 | 330 | 0.30 | 3.8 |
| 6-10 | PIM-1 | 3% LTL fd | THF | 1.6 | 646 | 0.26 | 4.3 |
| 6-11 | PIM-1 | 30% LTA-100/ PEI (199/1) | $CHCl_3$ | 1.0 | 190 | 0.36 | 3.5 |
| 6-12 | PIM-1 | 10% LTL fd/PPG (7.3/1) | THF | 1.0 | 1600 | 0.65 | 2.4 |

Tabelle 7 Kompositmembranen aus PIM1 CO 1-50 auf reinem PAN-Träger oder mit Teflon AF2400 hydrophobiertem Träger bei RT. (1) mit 0.005% TeflonAF2400 in FC77 überzogen; (2) mit 0,01% Teflon AF2400 in FC77 überzogen

| No. | Polymer | Träger | Lösemittel | Konzentration / % | Messdauer / h | J $O_2$ / ($m^3$ / $m^2$hbar) | α ($O_2/N_2$) |
|---|---|---|---|---|---|---|---|
| 7-1 | PIM1 CO1-50 | PAN | $CHCl_3$/THF4 % | 0.5 | 4600 | 0.05 | 3.0 |
| 7-2 | PIM1 CO1-50 | PAN | $CHCl_3$ | 2.0 | 312 | 0.12 | 6.1 |
| 7-3 | PIM1 CO1-50 | PAN (1) | $CHCl_3$ | 1.0 | 914 | 0.10 | 4.5 |
| 7-4 | PIM1 CO1-50 | PAN (1) | $CHCl_3$ | 0.5 | 294 | 0.12 | 3.5 |
| 7-5 | PIM1 CO1-50 | PAN (2) | $CHCl_3$ | 0.5 | 646 | 0.05 | 4.8 |

Aus Tabelle 7 ergeben sich bei Laufzeiten 300 bis 900 Stunden (h) im Dauerbetrieb $O_2$-Flüsse der Membranen von 0.05 bis 0.12 $m^3$ / $m^2$hbar bei einer Selektivität von 3.5 bis 6.1. Bei längerem Betrieb von 4600 h geht der $O_2$-Fluss und die $O_2/N_2$-Selektivität weiter zurück auf 0.05 $m^3$ / $m^2$hbar bei $O_2/N_2$ = 3.0.

Tabelle 8 Anfangsflüsse (J = $m^3/m^2hbar$) von Kompositmembranen aus PIM-1, PIM1 CO1-50 und PTMSP auf PAN-Träger mit Zusatz von Ammoniumsalzen bei RT (Raumtemperatur). No 6a= Wert 1. Tag; No 6b= Werte 20 Tage Dauerbetrieb.

| No. | Polymer | Zusatz | Lösemittel | Konzentration /% | J $O_2$ / ($m^3$/ $m^2$hbar) | J $N_2$ / ($m^3$ / $m^2$hbar) | J $H_2$ / ($m^3$/ $m^2$hbar) | J $CH_4$ / ($m^3$ / $m^2$hbar) |
|---|---|---|---|---|---|---|---|---|
| 8-0 | PIM-1 | Ohne | THF | 0.75 | 5.40 | | | |
| 8-1 | PIM-1 | 10% TMAF | THF/MeOH | 1 | 0.11 | 0.93 | 0.86 | 0.07 |
| 8-2 | PIM-1 | 10% TMAF+10%PPG | THF | 1 | 0.18 | 2.11 | 1.41 | 0.11 |
| 8-3 | PIM-1 | 10% n-C14TMABr | $CHCl_3$ | 1 | 0.51 | 4.00 | | |
| 8-4 | PIM-1 | 10% n-C14TMABr | $CHCl_3$ | 2 | 0.52 | 3.00 | | |
| 8-5 | PIM1CO1-50 | Ohne | $CHCl_3$ | 0.5 | 5.30 | | | |
| 8-6a | PIM1CO1-50 | 10% n-C14TMABr | $CHCl_3$ | 1 | 0.55 | 5.18 | | |
| 8-6b | PIM1CO1-50 | 10% n-C14TMABr | $CHCl_3$ | 1 | 0.20 | 1.54 | 1.51 | 0.05 |
| 8-7 | PIM1CO1-50 | 10% n-C14TMABr | $CHCl_3$ | 2 | 0.23 | 2.20 | | |
| 8-8 | PIM1CO1-50 | 10% n-C14TMABr | $CHCl_3$ | 1 | 2.31 | 16.90 | 3.64 | 1.19 |
| 8-9 | PIM1CO1-50 | 10% n-C14TMABr | $CHCl_3$ | 2 | 1.02 | 7.44 | 2.37 | 0.51 |
| 8-10 | PIM1CO1-50 | 10% n-C14TMABr | $CHCl_3$ | 1 | 5.50 | | | |

Aus Tabelle 8 ergibt sich, dass die Anfangsflüsse der Kompositmembranen mit Salzzusatz, gemessen mit Reingasen nach dem ersten Tag nach Membranherstellung, für PIM-1 deutlich niedriger liegen als ohne Salzzusatz

Tabelle 9 Selektivität der Kompositmembranen mit Reingasen für verschiedene Membranen mit Salzzusatz und ohne zum Vergleich bei Raumtemperatur (RT). No 6a= Wert 1. Tag; No 6b= Werte 20 Tage Dauerbetrieb.

| No | Polymer | Zusatz | Lösemittel | Konzentration / % | α ($O_2/N_2$) | α ($CO_2/N_2$) | α ($O_2/ CH_4$) | α ($H_2/N_2$) | α ($H_2/CH_4$) |
|---|---|---|---|---|---|---|---|---|---|
| 9-0 | PIM-1 | Ohne | THF | 0.75 | 2.7 | | | | |
| 9-1 | PIM-1 | 10% TMAF | THF/MeOH | 1 | 3.2 | 27 | 14 | 25 | 13 |
| 9-2 | PIM-1 | 10%TMAF+10%PPG | THF | 1 | 3.9 | 46 | 19 | 31 | 13 |
| 9-3 | PIM-1 | 10% n-C14TMABr | $CHCl_3$ | 1 | 3.7 | 29 | | | |
| 9-4 | PIM-1 | 10% n-C14TMABr | $CHCl_3$ | 2 | 3.9 | 23 | | | |
| 9-5 | PIM1 CO1-50 | Ohne | $CHCl_3$ | 0.5 | 2.4 | | | | |
| 9-6a | PIM1 CO1-50 | 10% n-C14TMABr | $CHCl_3$ | 1 | 3.8 | 36 | | | |
| 9-6b | PIM1 CO1-50 | 10% n-C14TMABr | CHCl3 | 1 | 6.1 | 47 | 34 | 46 | 34 |
| 9-7 | PIM1 CO1-50 | 10% n-C14TMABr | $CHCl_3$ | 2 | 3.8 | 37 | | | |
| 9-8 | PIM1 CO1-50 | 10% n-C14TMABr | $CHCl_3$ | 1 | 3.0 | 22 | 14 | 5 | 3 |
| 9-9 | PIM1 CO1-50 | 10% n-C14TMABr | $CHCl_3$ | 2 | 2.7 | 20 | 15 | 6 | 5 |
| 9-10 | PTMSP | 10% n-C14TMABr | $CHCl_3$ | 1 | 1.6 | | | | |

Tabelle 10 Gemischgasmessungen von PIM1 CO 1 -50-Kompositmembranen aus 1% $CHCl_3$ auf PAN-Träger bei RT und 30 Vol-% $CO_2$ im Feed.

| Polymer | Zusatz | Alter Membran, Tage | J / ($m^3N$ / $m^2hbar$) | Selektivität $\alpha$ ($CO_2/N_2$) | Feeddruck / bar |
|---|---|---|---|---|---|
| PIM1 CO1-50 | (1) | 2 | 4.10 | 27 | 18 |
| PIM1 CO1-50 | (1) | 5 | 2.40 | 28 | 5 |
| PIM1 CO1-50 | (1) | 5 | 2.40 | 27 | 12 |
| PIM1 CO1-50 | (1) | 5 | 2.40 | 27 | 18 |
| PIM1 CO1-50 | 10% n-C14TMABr | 7 | 1.40 | 30 | 10 |
| PIM1 CO1-50 | 10% n-C14TMABr | 8 | 1.10 | 29 | 10 |
| PIM1 CO1-50 | 20% PEI | 2 | 0.50 | 30 | 5-20 |
| PIM1 CO1-50 | 20% PEI | 3 | 0.25 | 26 | 20 |
| PIM1 CO1-50 | 20% PEI | 3 | 0.40 | 29 | 30 |
| PIM1 CO1-50 | (1) | 1 | 4.00 | 22 | 5 |
| PIM1 CO1-50 | (1) | 1 | 2.70 | 20 | 10 |
| PIM1 CO1-50 | (1) | 1 | 1.80 | 17 | 20 |
| PIM1 CO1-50 | (1) | 2 | 1.30 | 14 | 5-20 |
| PIM1 CO1-50 | | 22 | 0.92 | 33 | 5 |
| PIM1 CO1-50 | | 22 | 0.68 | 31 | 10 |
| PIM1 CO1-50 | | 22 | 0.62 | 30 | 20 |
| PIM1 CO1-50 | | 22 | 0.71 | 30 | 30 |
| PIM1 CO1-50 | | 22 | 0.91 | 30 | 45 |
| PIM1 CO1-50 | | 22 | 0.24 | 26 | 20 |
| PIM1 CO1-50 | | 27 | 0.18 | 25 | 10 |
| (1) PAN mit 0.01% Teflon® AF2400 auf FC77. | | | | | |

Aus den Tabellen 8 und 9 ergibt sich, dass die Membranen durch den Salzzusatz kleinere Flüsse zeigen und die Gasselektivität sich nicht erhöht. Eine Ausnahme macht die Membran 8-6 respektive 9-6, die nach dem Dauertest mit Druckluft (8-6b; 9-6b) nur wenig an Fluss verliert (von J=0.55 auf J=0.20 $m^3/m^2hbar$), dabei jedoch die Selektivität von 3,8 auf 6,1 ansteigt.

Der Permeatfluss der salzhaltigen Membranen fällt mit der Zeit kontinuierlich, aber mit sich verringernder Steigung ab. Aus dieser Flusskurve lassen sich mit verschiedenen mathematischen Modellen Vorhersagen für die Flüsse nach bestimmten Zeiten machen. Die Selektivität steigt mit der Zeit, nähert sich aber ab einer bestimmten Zeit einem Grenzwert an. Dies ist bei der Membran 8-6a aus Tabelle 8 bei 390h erreicht Es wird eine $\alpha(O_2/N_2)$-Selektivität bei Feed mit trockener Druckluft von 7.5 gefunden.

Nach 400h ist der Fluss auf 10% des Höchstwertes zurückgegangen, der dann innerhalb von 5 Jahren je nach Rechenmodell nur noch auf 5 bis 8% des Höchstwertes zurückgeht.

Der errechnete $O_2$-Fluss liegt bei einer $O_2/N_2$-Selektivität von 7,5 bei J ($O_2$) = 0.06 bis 0.22 $m^3/m^2hbar$. Diese Stabilität wird mit reinen Membranen ohne jegliche Zusätze nicht erreicht. Membranen mit permeablen Füllstoffen wie in den Beispielen oben beschrieben zeigen nur eine wesentlich geringere Selektivität für $\alpha(O_2/N_2)$ von 3 bis 4.5 bei weiter abnehmenden Flüssen.

Beispiel 3 Gemischmessungen von Kompositmembranen

In einem Hochdruckkreislauf, ausgestattet mit Flussmessern, Druckmessern und einem Gaschromatographen zur Detektion der Gemischzusammensetzung in Feed, Retentat und Permeat werden $CO_2/N_2$ bzw. $CO_2/CH_4$ bei verschiedenen Drucken und RT gemessen.

Aus Tabelle 10 ist ersichtlich, dass hohe Flüsse für $CO_2$ bei Gemischgasselektivitäten bis zu 30 für $CO_2/N_2$ gefunden werden.

Nach 2 Tagen im Betrieb stabilisiert sich der Fluss. Die Selektivität für PIM-1 Membranen kann durch Zusatz von PPG oder PEG verbessert werden (siehe Tabelle 11).

Tabelle 11 Gemischgasmessungen von PIM-1 mit oder ohne Zusatz von PPG oder PEG. Komposite aus 1 % THF und bei Raumtemperatur (RT) mit 30Vol-% $CO_2$ im Feed gemessen.

| Polymer | Zusatz | Alter Membran Tage | J / $m^3N$ / $m^2hbar$) | Selektivität $\alpha$ ($CO_2/N_2$) | Feeddruck /bar |
|---|---|---|---|---|---|
| PIM-1 | | 24 | 1.40 | 20 | 12 |
| PIM-1 | | 24 | 1.70 | 20 | 18 |
| PIM-1 | 15% PPG | 3 | 0.54 | 27 | 10 |
| PIM-1 | 20% PEG | 12 | 1.00 | 31 | 6 |
| PIM-1 | 20% PEG | 12 | 0.53 | 27 | 10 |

Tabelle 10 Gemischgasmessungen von PIM1 CO 1 -50-Kompositmembranen aus 1 % $CHCl_3$ auf PAN-Träger bei RT und 30 Vol.-% $CO_2$ im Feed.

| Polymer | Zusatz | Alter Membran, Tage | J $m^3N/m^2hbar$ | Selektivität $CO_2/N_2$ | Feeddruck /bar |
|---|---|---|---|---|---|
| PIM1 CO1-50 | (1) | 2 | 4.10 | 27 | 18 |
| PIM1 CO1-50 | (1) | 5 | 2.40 | 28 | 5 |
| PIM1 CO1-50 | (1) | 5 | 2.40 | 27 | 12 |
| PIM1 CO1-50 | (1) | 5 | 2.40 | 27 | 18 |
| PIM1 CO1-50 | 10% n-C14TMABr | 7 | 1.40 | 30 | 10 |
| PIM1 CO1-50 | 10% n-C14TMABr | 8 | 1.10 | 29 | 10 |
| PIM1 CO1-50 | 20% PEI | 2 | 0.50 | 30 | 5-20 |
| PIM1 CO1-50 | 20% PEI | 3 | 0.25 | 26 | 20 |
| PIM1 CO1-50 | 20% PEI | 3 | 0.40 | 29 | 30 |
| PIM1 CO1-50 | (1) | 1 | 4.00 | 22 | 5 |
| PIM1 CO1-50 | (1) | 1 | 2.70 | 20 | 10 |
| PIM1 CO1-50 | (1) | 1 | 1.80 | 17 | 20 |
| PIM1 CO1-50 | (1) | 2 | 1.30 | 14 | 5-20 |
| PIM1 CO1-50 | | 22 | 0.92 | 33 | 5 |
| PIM1 CO1-50 | | 22 | 0.68 | 31 | 10 |
| PIM1 CO1-50 | | 22 | 0.62 | 30 | 20 |
| PIM1 CO1-50 | | 22 | 0.71 | 30 | 30 |
| PIM1 CO1-50 | | 22 | 0.91 | 30 | 45 |

(fortgesetzt)

| Polymer | Zusatz | Alter Membran, Tage | J $m^3N/m^2hbar$ | Selektivität $CO_2/N_2$ | Feeddruck /bar |
|---|---|---|---|---|---|
| PIM1 CO1-50 | | 22 | 0.24 | 26 | 20 |
| PIM1 CO1-50 | | 27 | 0.18 | 25 | 10 |
| (1) PAN mit 0.01 % Teflon® AF2400 auf FC77. | | | | | |

Die in den Tabellen 1 bis 3 genannten Literaturangaben sind veröffentlicht wie folgt:


JMS2005 P.M. Budd et al. "Gas separation membranes from polymers of intrinsic microporosity", Journal of Membrane Science 251 (2005), 263-269.

JMS2008 P.M. Budd et al. "Gas permeation parameters and other physicochemical properties of a polymer of intrinsic microporosity: Polybenzodioxane PIM-1", Journal of Membrane Science 325 (2008), 851-860.

Merke12000 T.C. Merkel et al., "Sorption and Transport of Hydrocarbon and Perfluorocarbon Gases in Poly(1-trimethylsilyl-1-propyne)", Journal of Polymer Science: Part B: Polymer Physics 38 (2000), 273-296.


Insbesondere eignen sich die beschriebenen Kompositmembranen für die Gastrennung, vorzugsweise von $O_2/N_2$-Gasgemischen oder $CO_2/N_2$ -Gasgemischen.

Alle genannten Merkmale, auch die der Beschreibung allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

**Patentansprüche**

1. Verfahren zum Herstellen einer Membran, insbesondere Gastrennmembran, wobei die Membran eine selektive Trennschicht aufweist, mit den folgenden Schritten:

   a) eine Polymerlösung wird aus wenigstens einem Ammoniumsalz und wenigstens einem mit dem wenigstens einen Ammoniumsalz kompatiblen Polymer hergestellt,
   b) die Polymerlösung wird zu einem Film gegossen,
   c) aus dem Film wird in einem weiteren Schritt die selektive Trennschicht, vorzugsweise durch Trocknung, hergestellt.

2. Verfahren nach Anspruch 1, **dadurch gekennzeichnet, dass** als Polymer für die Polymerlösung ein Polymer mit einem großen freien Volumen, insbesondere mit einem Anteil an freiem Volumen (fractional free volume (FFV)) von mindestens 15% und mehr, und/oder ein glasartiges, vorzugsweise amorphes, Polymer verwendet wird.

3. Verfahren nach Anspruch 1 oder 2, **dadurch gekennzeichnet, dass** als Polymer für die Polymerlösung ein Polymer mit intrinsischer Mikroporosität, insbesondere PIM-1 oder PIM-1 CO1-50, oder Poly(1-Trimethylsilyl-1-Propyne) (PTMS) verwendet wird.

4. Verfahren nach einem der Ansprüche 1 bis 3, **dadurch gekennzeichnet, dass** die Herstellung der Polymerlösung in einem, vorzugsweise organischen, polaren Lösungsmittel ausgeführt wird.

5. Verfahren nach einem der Ansprüche 1 bis 4, **dadurch gekennzeichnet, dass** die Herstellung der Polymerlösung in einem halogenierten Lösungsmittel, vorzugsweise Chloroform ($CHCl_3$), oder Dichlormethan oder Tetrahydrofuran (THF) oder 1,4-Dioxan oder in Alkohol(en) oder in Keton(en), insbesondere Aceton oder Methylethylketon, oder Mischungen davon ausgeführt wird.

6. Verfahren nach einem der Ansprüche 1 bis 5, **dadurch gekennzeichnet, dass** die Polymerlösung bei einer Temperatur zwischen 20° Celsius bis 90° Celsius hergestellt wird.

**7.** Verfahren nach einem der Ansprüche 1 bis 6, **dadurch gekennzeichnet, dass** als Ammoniumsalz ein Ammoniumsalz gemäß der allgemeinen Formel

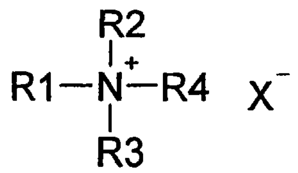

,

verwendet wird, wobei insbesondere R1, R2, R3 und R4 jeweils organische Reste sind und $X^-$ ein Anion ist.

**8.** Verfahren nach einem der Ansprüche 1 bis 7, **dadurch gekennzeichnet, dass** als Ammoniumsalz n-Hexyltrimethylammoniumbromid (n-C6-TMABr) oder n-Tetradecyltrimethylammoniumbromid (n-C14-TMABr) oder Tetramethylammoniumfluorid (TMAF) oder ein polymeres Ammoniumsalz verwendet wird.

**9.** Verfahren nach einem der Ansprüche 1 bis 8, **dadurch gekennzeichnet, dass** als Polymerlösung eine Mischung von Ammoniumsalz und Polymer im Mischungsverhältnis zwischen (5% Ammoniumsalz und 95% Polymer) und (40% Ammoniumsalz und 60% Polymer) bereitgestellt wird.

**10.** Verfahren nach einem der Ansprüche 1 bis 9, **dadurch gekennzeichnet, dass** der Film oder die selektive Trennschicht auf einen, vorzugsweise porösen, Träger, insbesondere PAN-Träger, aufgebracht wird.

**11.** Membran, insbesondere Gastrennmembran, die eine selektive Trennschicht aufweist, vorzugsweise erhältlich oder hergestellt durch Ausführung der Verfahrensschritte gemäß dem Verfahren nach einem der Ansprüche 1 bis 10, wobei die selektive Trennschicht aus wenigstens einem Ammoniumsalz und einem mit dem wenigstens einen Ammoniumsalz kompatiblen Polymer besteht oder hergestellt ist oder wird.

**12.** Membran nach Anspruch 10, **dadurch gekennzeichnet, dass** die selektive Trennschicht eine Mischung zwischen (5% Ammoniumsalz und 95% Polymer) und (40% Ammoniumsalz und 60% Polymer) aufweist.

**13.** Membran nach einem der Ansprüche 11 oder 12, **dadurch gekennzeichnet, dass** die selektive Trennschicht auf einem, vorzugsweise porösen, Träger, vorzugsweise PAN-Träger, angeordnet ist oder wird.

**14.** Verwendung von wenigstens einem Ammoniumsalz und einem mit dem Ammoniumsalz kompatiblen Polymer zur Herstellung einer Membran, insbesondere Gastrennmembran, nach einem der Ansprüche 11 bis 13.

**15.** Verwendung einer Membran nach einem der Ansprüche 11 bis 13 zur Trennung von Gasen aus einem Gasgemisch.

Europäisches Patentamt
European Patent Office
Office européen des brevets

**EUROPÄISCHER RECHERCHENBERICHT**

Nummer der Anmeldung
EP 10 16 6186

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/249445 A1 (WU XIAOSONG [US] ET AL) 9. November 2006 (2006-11-09)<br>* Beispiel 7 *<br>* Absatz [0050] * | 1-7,9-14 | INV.<br>B01D71/44<br>B01D71/82<br>B01D53/22 |
| X | US 4 762 535 A (PEZ GUIDO P [US] ET AL) 9. August 1988 (1988-08-09)<br>* Beispiel 2 * | 1-5,7,<br>10,11,<br>13-15 | |
| X | WO 99/06138 A1 (EXXON RESEARCH ENGINEERING CO [US]) 11. Februar 1999 (1999-02-11)<br>* Seite 1; Beispiel 6 * | 1-5,7,8,<br>10,11,<br>13-15 | |
| X | WO 2006/127309 A2 (ARKEMA INC [US]; GOLDBACH JAMES T [US]; GABOURY SCOTT [US]; UMPLEBY RO) 30. November 2006 (2006-11-30)<br>* Seite 18, Zeile 19; Beispiele 36,44 * | 1-5,7,8,<br>10,11,<br>13,14 | |
| X | US 4 758 250 A (LACIAK DANIEL V [US] ET AL) 19. Juli 1988 (1988-07-19) | 14 | RECHERCHIERTE SACHGEBIETE (IPC) |
| A | * Beispiel 8 * | 1-13,15 | B01D |
| X | QUINN R ET AL: "New facilitated transport membranes for the separation of carbon dioxide from hydrogen and methane", JOURNAL OF MEMBRANE SCIENCE, ELSEVIER SCIENTIFIC PUBL.COMPANY. AMSTERDAM, NL LNKD- DOI:10.1016/0376-7388(95)00021-4, Bd. 104, Nr. 1, 15. August 1995 (1995-08-15), Seiten 139-146, XP004041329, ISSN: 0376-7388 | 14 | |
| A | * das ganze Dokument * | 1-13,15 | |
| | -/-- | | |

Der vorliegende Recherchenbericht wurde für alle Patentansprüche erstellt

1

| Recherchenort | Abschlußdatum der Recherche | Prüfer |
|---|---|---|
| München | 17. November 2010 | Hennebrüder, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 16 6186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2005/113121 A1 (UNIV MANCHESTER [GB]; GEESTHACHT GKSS FORSCHUNG [DE]; MCKEOWN NEIL B [) 1. Dezember 2005 (2005-12-01)<br>* das ganze Dokument *<br>----- | 1-15 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| München | 17. November 2010 | Hennebrüder, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 10 16 6186

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2010

| Im Recherchenbericht angeführtes Patentdokument | Datum der Veröffentlichung | Mitglied(er) der Patentfamilie | Datum der Veröffentlichung |
|---|---|---|---|
| US 2006249445 A1 | 09-11-2006 | KEINE | |
| US 4762535 A | 09-08-1988 | CA 1304697 C | 07-07-1992 |
| | | DE 3851367 D1 | 13-10-1994 |
| | | DE 3851367 T2 | 19-01-1995 |
| | | EP 0293737 A2 | 07-12-1988 |
| | | JP 1983056 C | 25-10-1995 |
| | | JP 7005297 B | 25-01-1995 |
| | | JP 63310719 A | 19-12-1988 |
| | | MX 163704 B | 15-06-1992 |
| WO 9906138 A1 | 11-02-1999 | CA 2294531 A1 | 11-02-1999 |
| | | EP 1024881 A1 | 09-08-2000 |
| | | JP 4264194 B2 | 13-05-2009 |
| | | JP 2001511430 T | 14-08-2001 |
| | | US 6579331 B1 | 17-06-2003 |
| WO 2006127309 A2 | 30-11-2006 | CA 2609604 A1 | 30-11-2006 |
| | | CN 101180760 A | 14-05-2008 |
| | | EP 1889322 A2 | 20-02-2008 |
| | | JP 2008545834 T | 18-12-2008 |
| | | KR 20080012890 A | 12-02-2008 |
| | | US 2008242833 A1 | 02-10-2008 |
| | | US 2008242805 A1 | 02-10-2008 |
| | | US 2008242819 A1 | 02-10-2008 |
| | | US 2008241630 A1 | 02-10-2008 |
| | | US 2006269815 A1 | 30-11-2006 |
| US 4758250 A | 19-07-1988 | CA 1304696 C | 07-07-1992 |
| | | DE 3875163 D1 | 12-11-1992 |
| | | DE 3875163 T2 | 29-04-1993 |
| | | EP 0293736 A2 | 07-12-1988 |
| | | JP 1005907 A | 10-01-1989 |
| | | JP 7042102 B | 10-05-1995 |
| | | MX 163746 B | 18-06-1992 |
| WO 2005113121 A1 | 01-12-2005 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20090277837 A1
- WO 2005012397 A2
- US 20090031897 A1
- US 7658784 B2
- US 7344585 B1


### In der Beschreibung aufgeführte Nicht-Patentliteratur


- **ROBESON, L. M.** The upper bound revisited. *Journal of Membrane Science,* 2008, vol. 320 (1-2), 390-400
- **SHAO, L. et al.** Crosslinking and stabilization of high fractional free volume polymers for gas Separation. *International Journal of Greenhouse Gas Control,* 2008, vol. 2 (4), 492-501
- **AL-MASRI, M. et al.** New polyimides for gas Separation. 1. Polyimides derived from substituted terphenylenes and 4,4'-(hexafluoroiso-propylidene)diphthalic anhydride. *Macromolecules,* 1999, vol. 32, 7853, 7858
- **KRICHELDORF, H. R. et al.** Cyclic and telechelic ladder polymers derived from tetrahydroxytetramethylspirobisindane and 1,4-dicyanotetrafluorobenzene. *J. Polym. Sci. Part A: Polym. Chem.,* 2006, vol. 44, 5344-5352
- **P.M. BUDD et al.** Gas separation membranes from polymers of intrinsic microporosity. *Journal of Membrane Science,* 2005, vol. 251, 263-269
- **P.M. BUDD et al.** Gas permeation parameters and other physicochemical properties of a polymer of intrinsic microporosity: Polybenzodioxane PIM-1. *Journal of Membrane Science,* 2008, vol. 325, 851-860
- **T.C. MERKEL et al.** Sorption and Transport of Hydrocarbon and Perfluorocarbon Gases in Poly(1-trimethylsilyl-1-propyne. *Journal of Polymer Science: Part B: Polymer Physics,* 2000, vol. 38, 273-296